# EUROPEAN PATENT APPLICATION

(11) **EP 4 668 063 A1**
(43) Date of publication of application: **24.12.2025**
(21) Application number: 25156797.0
(22) Date of filing: 10.02.2025
(51) Int. Cl.: G06F 1/3234, H04N 1/00

(54) **INFORMATION PROCESSING SYSTEM, POWER MANAGEMENT SYSTEM, AND PROGRAM**

(30) Priority: 21.06.2024 JP 2024100568
(71) Applicant: FUJIFILM Business Innovation Corp., Minato-ku Tokyo (JP)
(72) Inventor: TOMOKANE, Hideyuki, Yokohama-shi, Kanagawa (JP)
(74) Representative: Kurig, Thomas

(57) **Abstract**

An information processing system includes a processor configured to store identification information of an external apparatus and identification information of a smart plug that is capable of changing a supply status of power to the external apparatus in accordance with an instruction from outside in association with each other, and control the external apparatus and the smart plug corresponding to the external apparatus in accordance with one instruction input to the external apparatus.

## Description

### Background

### (i) Technical Field

The present disclosure relates to an information processing system, a power management system, and a program.

### (ii) Related Art

Japanese Unexamined Patent Application Publication No. 08-238822 discloses a printer apparatus in which the power is set to the on status only when print data is printed so that the power of the printer apparatus is prevented from being turned on at all times.

Japanese Unexamined Patent Application Publication No. 2015-171198 discloses an automatic registration apparatus that associates a power supply apparatus with an electric device connected to the power supply apparatus and automatically registers the correspondence between the power supply apparatus and the electric device.

### Summary

In order to completely eliminate the standby power of an apparatus such as an image forming apparatus, it may be possible to supply power to the apparatus via a smart plug and turn off the power supply from the smart plug to the apparatus when the power of the apparatus is turned off.

However, with such a configuration, when the power of the apparatus is turned on/off, the user needs to individually operate both the apparatus and the smart plug, which is troublesome.

Accordingly, it is an object of the present disclosure to provide an information processing system, a power management system, and a program capable of operating both an apparatus and a smart plug in accordance with one instruction input to the apparatus.

According to a first aspect of the present disclosure, there is provided an information processing system including a processor configured to store identification information of an external apparatus and identification information of a smart plug that is capable of changing a supply status of power to the external apparatus in accordance with an instruction from outside in association with each other, and control the external apparatus and the smart plug corresponding to the external apparatus in accordance with one instruction input to the external apparatus.

According to a second aspect of the present disclosure, in the information processing system according to the first aspect, when the external apparatus is in a power-off status, the processor may be configured to transmit, to the smart plug, an instruction to set the supply status of power to the external apparatus to an on status and then transmit an instruction to perform processing to the external apparatus.

According to a third aspect of the present disclosure, in the information processing system according to the second aspect, the external apparatus may be an image forming apparatus, and when the image forming apparatus is in a power-off status, the processor may be configured to transmit, to the smart plug, an instruction to set a supply status of power to the image forming apparatus to an on status and then transmit a print instruction to the image forming apparatus.

According to a fourth aspect of the present disclosure, there is provided a power management system including an external apparatus, a smart plug that is capable of changing a supply status of power to the external apparatus in accordance with an instruction from outside, and an information processing system including a processor, in which the processor is configured to store identification information of the external apparatus and identification information of the smart plug in association with each other, and control the external apparatus and the smart plug corresponding to the external apparatus in accordance with one instruction input to the external apparatus.

According to a fifth aspect of the present disclosure, in the power management system according to the fourth aspect, the external apparatus may transmit a notification indicating a transition to a standby status to the processor when a set time has elapsed, and when the notification is received, the processor may be configured to transmit, to the smart plug, an instruction to set the supply status of power to the external apparatus to an off status.

According to a sixth aspect of the present disclosure, in the power management system according to the fifth aspect, the processor may be one of a plurality of processors, and the external apparatus may select a processor connectable to the external apparatus from the plurality of processors and transmit the notification to the selected processor.

According to a seventh aspect of the present disclosure, in the power management system according to any one of the fourth to sixth aspects, the external apparatus may acquire identification information of the smart plug connected to the external apparatus, and the processor may be configured to acquire identification information of the external apparatus and identification information of the smart plug through the external apparatus.

According to an eighth aspect of the present disclosure, there is provided a program causing a computer to execute a process including: storing identification information of an external apparatus and identification information of a smart plug that is capable of changing a supply status of power to the external apparatus in accordance with an instruction from outside in association with each other; and controlling the external apparatus and the smart plug corresponding to the external apparatus in accordance with one instruction input to the external apparatus.

With the information processing system of the first aspect, both the external apparatus and the smart plug can be operated by one instruction input to the external apparatus.

With the information processing system of the second aspect, even when the external apparatus is in the power-off status, the instruction to perform processing can be transmitted to the external apparatus.

With the information processing system of the third aspect, even when the image forming apparatus is in the power-off status, the print instruction can be transmitted to the image forming apparatus.

With the power management system of the fourth aspect, both the external apparatus and the smart plug can be operated by one instruction input to the external apparatus.

With the power management system of the fifth aspect, the external apparatus can autonomously set the supply status of power to the external apparatus to the off status.

With the power management system of the sixth aspect, even when connection to a processor among the plurality of processors fails, the smart plug can be controlled via another processor.

With the power management system of the seventh aspect, the processor can acquire the identification information of the external apparatus and the identification information of the smart plug from a single site.

With the program of the eighth aspect, both the external apparatus and the smart plug can be operated by one instruction input to the external apparatus.

### Brief Description of the Drawings

Exemplary embodiments of the present disclosure will be described in detail based on the following figures, wherein:
Fig. 1 is a diagram illustrating a system configuration of a power management system according to an exemplary embodiment of the present disclosure;
Fig. 2 is a block diagram illustrating a hardware configuration of a user terminal in the above-described power management system;
Fig. 3 is a block diagram illustrating a hardware configuration of an image forming apparatus in the above-described power management system;
Fig. 4 is a block diagram illustrating a hardware configuration of a smart plug in the above-described power management system;
Fig. 5 is a sequence diagram illustrating a flow of processing when a print job is requested to an image forming apparatus in a power-off status;
Fig. 6 is a sequence diagram illustrating a flow of processing when the image forming apparatus transitions to a standby status; and
Fig. 7 is a sequence diagram illustrating a flow of processing related to acquisition of identification information of the image forming apparatus and identification information of the smart plug in the user terminal.

### Detailed Description

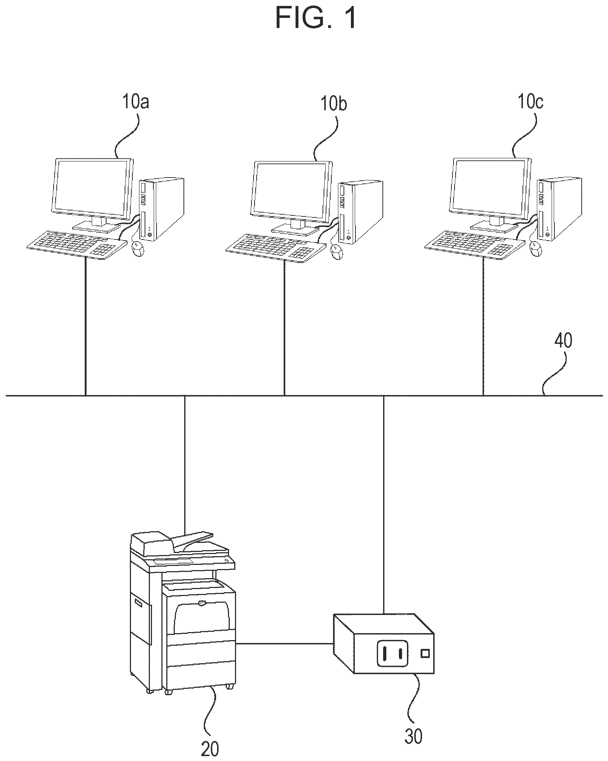

Exemplary embodiments for implementing the technology according to the present disclosure will be described below in detail with reference to the drawings. Fig. 1 is a diagram illustrating a system configuration of a power management system according to an exemplary embodiment.

As illustrated in Fig. 1, a power management system according to the present exemplary embodiment includes a plurality of user terminals 10a, 10b, and 10c, an image forming apparatus 20, and a smart plug 30.

The user terminals 10a, 10b, and 10c are terminals for giving an instruction of a job such as printing to the image forming apparatus 20. In the following description, the user terminals 10a, 10b, and 10c will be referred to as user terminals 10 when they need not be distinguished from one another.

The user terminal 10 is connected to the image forming apparatus 20 and the smart plug 30 via a network 40. The user terminal 10 is an example of an information processing system in the technology according to the present disclosure.

The image forming apparatus 20 is an apparatus that is what is called a multifunction peripheral having a plurality of functions such as a copy function, a print function, a facsimile function, and a scan function. The image forming apparatus 20 is an example of an external apparatus in the technology according to the present disclosure.

The smart plug 30 is an apparatus that supplies power to the image forming apparatus 20. The smart plug 30 is capable of changing the supply status of power to the smart plug 30 in accordance with an instruction from the outside in order to reduce the standby power of the image forming apparatus 20 to zero.

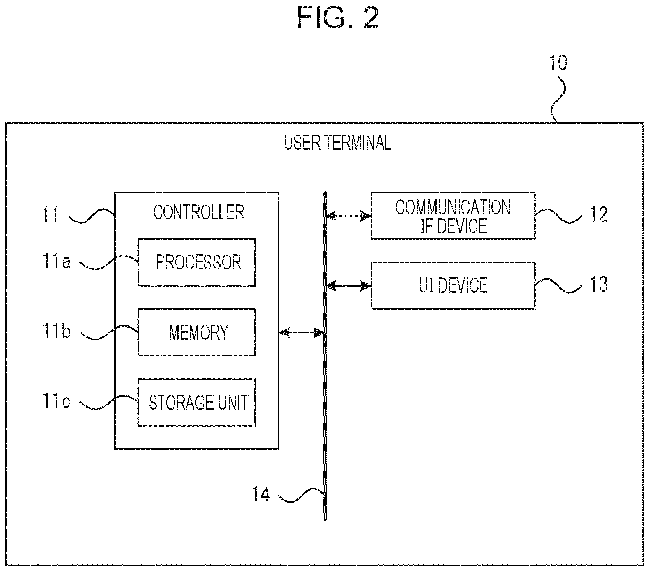

Next, a hardware configuration of the user terminal 10 according to the present exemplary embodiment will be described. Fig. 2 is a block diagram illustrating a hardware configuration of the user terminal 10.

As illustrated in Fig. 2, the user terminal 10 includes a controller 11, a communication interface (abbreviated as IF) device 12, and a user interface (abbreviated as UI) device 13. These components are connected to one another via a control bus 14.

The controller 11 includes a processor 11a, a memory 11b, and a storage unit 11c. The processor 11a executes predetermined processing based on a program that is read from the storage unit 11c and loaded to the memory 11b. The storage unit 11c includes, for example, a read only memory (ROM), a hard disk drive (HDD), or a solid state drive (SSD). The storage unit 11c stores various software programs including a program for using the image forming apparatus 20, data, etc. Hereinafter, the program for using the image forming apparatus 20 will be referred to as a printer driver.

According to the present exemplary embodiment, the processor 11a reads and executes the program stored in the storage unit 11c, but this is not a limitation. The program may be provided in a form recorded on a computer-readable recording medium. For example, the program may be provided in a form of being recorded in an optical disc such as a compact disc (CD)-read only memory (ROM) or a digital versatile disc (DVD)-ROM, or in a form of being recorded in a semiconductor memory such as a universal serial bus (USB) memory or a memory card. Further, the program may be acquired from an external apparatus via a communication line.

The communication IF device 12 transmits and receives data to and from an external apparatus or the like. The UI device 13 is a device for a user to receive or input information, such as a touch panel, a monitor, a keyboard, and/or a mouse.

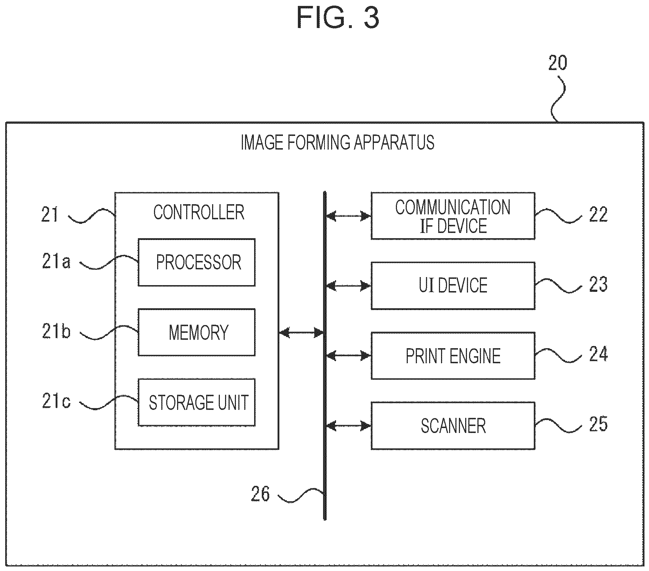

Next, a hardware configuration of the image forming apparatus 20 according to the present exemplary embodiment will be described. Fig. 3 is a block diagram illustrating a hardware configuration of the image forming apparatus 20.

As illustrated in Fig. 3, the image forming apparatus 20 includes a controller 21, a communication interface (abbreviated as IF) device 22, a user interface (abbreviated as UI) device 23, a print engine 24, and a scanner 25. These components are connected to one another via a control bus 26.

The controller 21 includes a processor 21a, a memory 21b, and a storage unit 21c. The processor 21a executes predetermined processing based on a program that is read from the storage unit 21c and loaded to the memory 21b. The storage unit 21c includes, for example, a ROM, an HDD, or an SSD. The storage unit 21c stores various programs, data, etc.

According to the present exemplary embodiment, the processor 21a reads and executes the program stored in the storage unit 21c, but this is not a limitation. The program may be provided in a form of being recorded in the computer-readable recording medium as described above. Furthermore, the program may be acquired from an external apparatus via a communication line.

The communication IF device 22 transmits and receives data to and from an external apparatus or the like. The UI device 23 is, for example, a device for a user to receive or input information, such as a touch panel and/or a button. The print engine 24 prints an image on a recording medium such as a print sheet through processes such as charging, exposure, development, transfer, and fixing. The scanner 25 reads a document loaded in the image forming apparatus 20 as image data.

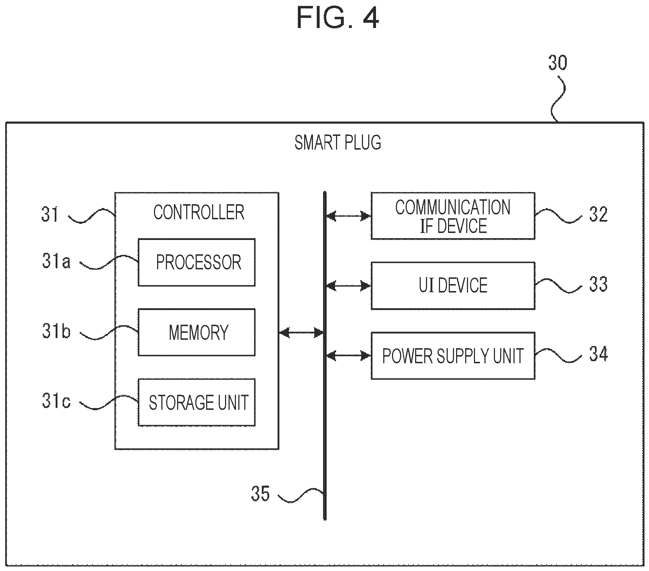

Next, a hardware configuration of the smart plug 30 according to the present exemplary embodiment will be described. Fig. 4 is a block diagram illustrating a hardware configuration of the smart plug 30.

As illustrated in Fig. 4, the smart plug 30 includes a controller 31, a communication interface (abbreviated as IF) device 32, a user interface (abbreviated as UI) device 33, and a power supply unit 34. These components are connected to one other via a control bus 35.

The controller 31 includes a processor 31a, a memory 31b, and a storage unit 31c. The processor 31a executes predetermined processing based on a program that is read from the storage unit 31c and loaded to the memory 31b. The storage unit 31c includes, for example, a ROM, an HDD, or an SSD. The storage unit 31c stores various programs, data, etc.

According to the present exemplary embodiment, the processor 31a reads and executes the program stored in the storage unit 31c, but this is not a limitation. The program may be provided in a form of being recorded in the computer-readable recording medium as described above. Further, the program may be acquired from an external apparatus via a communication line.

The communication IF device 32 transmits and receives data to and from an external apparatus or the like. The UI device 33 is, for example, a device for a user to receive or input information, such as a touch panel and/or a button.

The power supply unit 34 supplies power to a connected apparatus. The power supply unit 34 can switch between the on status and the off status of power supply to the connected apparatus under the control of the controller 31.

In order to completely eliminate the standby power of the image forming apparatus 20, it may be possible to supply power via the smart plug 30. In this case, it is troublesome to individually operate both the image forming apparatus 20 and the smart plug 30 in order to turn on/off the power of the image forming apparatus 20.

In order to solve such a problem, the controller 11 in the user terminal 10 according to the present exemplary embodiment stores the identification information of the image forming apparatus 20 and the identification information of the smart plug 30 in association with each other and controls the image forming apparatus 20 and the smart plug 30 corresponding to the image forming apparatus 20 in accordance with one instruction input to the image forming apparatus 20.

Here, the identification information of the image forming apparatus 20 and the identification information of the smart plug 30 are information with which each apparatus can be individually identified and may be, for example, an IP address or a serial number of each apparatus.

For example, when the image forming apparatus 20 is in the power-off status, the controller 11 transmits, to the smart plug 30, an instruction to set the supply status of power to the image forming apparatus 20 to the on status and then transmits an instruction of a job such as printing to the image forming apparatus 20.

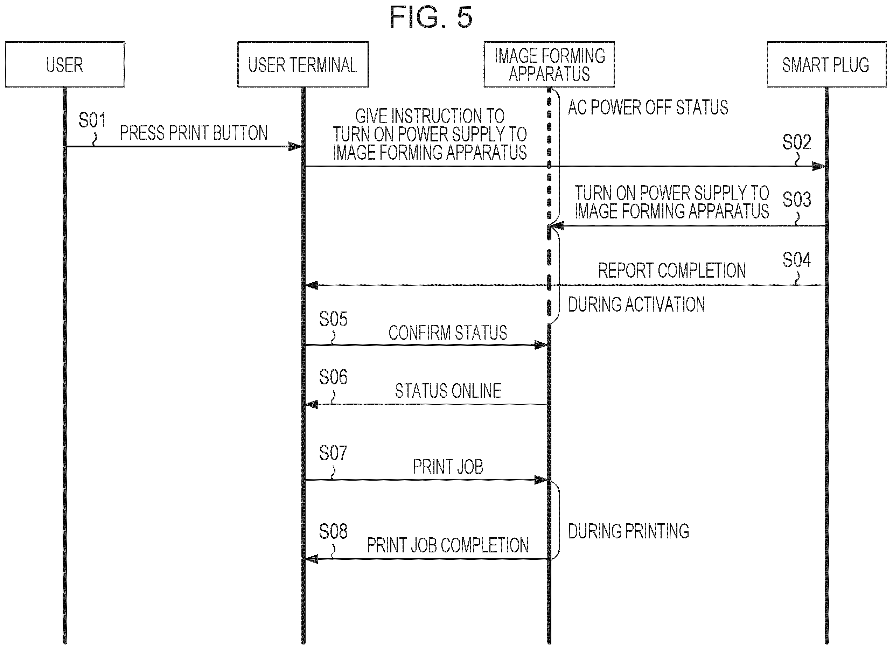

Here, the flow of processing when a print job is requested to the image forming apparatus 20 in the power-off status will be described with reference to a sequence diagram of Fig. 5.

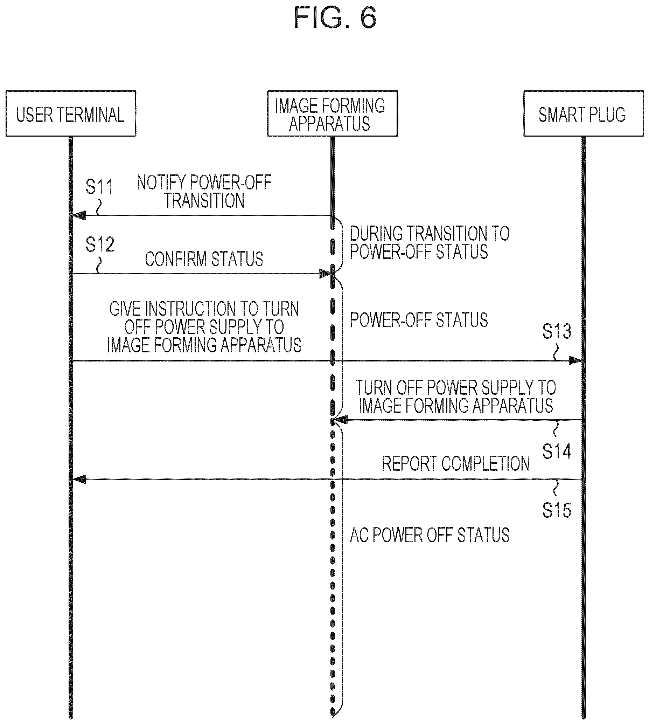

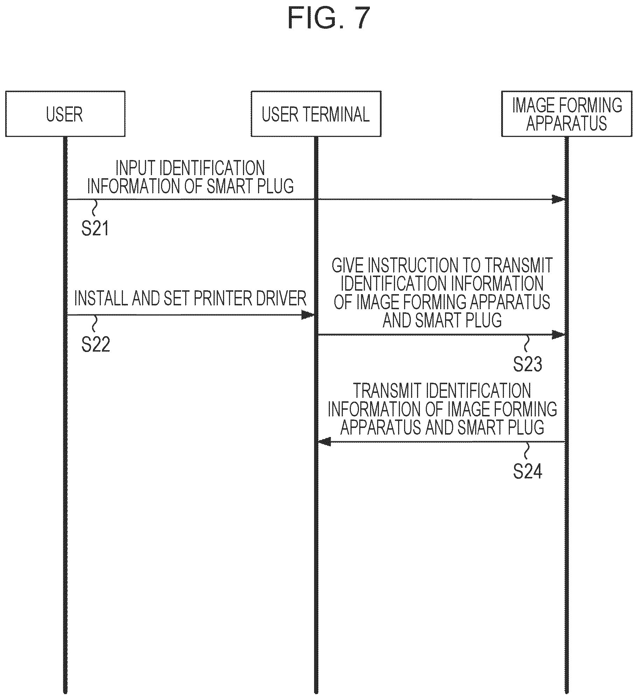

In the sequence diagram of Fig. 5, to be precise, the process of the user terminal 10 is performed by the controller 11, but for convenience, the user terminal 10 will be described as a subject. Further, to be precise, the process of the image forming apparatus 20 is performed by the controller 21, but for convenience, the image forming apparatus 20 will be described as a subject. Moreover, to be precise, the process of the smart plug 30 is performed by the controller 31, but for convenience, the smart plug 30 will be described as a subject. This also applies to the sequence diagrams of Figs. 6 and 7 described below.

First, in step S01, the user presses a print button for executing printing by using the user terminal 10 in which a printer driver for the image forming apparatus 20 is installed.

Next, in step S02, the user terminal 10 gives an instruction to the smart plug 30 to turn on the power supply to the image forming apparatus 20.

Next, the smart plug 30 turns on the power supply to the image forming apparatus 20 in step S03 and then transmits a completion report to the user terminal 10 in step S04. When power is supplied from the smart plug 30, the image forming apparatus 20 starts an activation process.

Next, in step S05, the user terminal 10 conducts status confirmation for the activation status of the image forming apparatus 20. When the image forming apparatus 20 receives the status confirmation from the user terminal 10 after the activation, the image forming apparatus 20 notifies the user terminal 10 of the online status in step S06.

Next, in step S07, the user terminal 10 transmits a print job to the image forming apparatus 20.

Next, the image forming apparatus 20 executes the print job and, when the print job is completed, the image forming apparatus 20 notifies the user terminal 10 of the completion in step S08.

Further, the image forming apparatus 20 may transmit the notification indicating a transition to the standby status to the user terminal 10 when the set time has elapsed, and the user terminal 10 may transmit, to the smart plug 30, an instruction to set the supply status of power to the image forming apparatus 20 to the off status when the notification is received.

Here, a flow of processing when the image forming apparatus 20 transitions to the standby status will be described with reference to a sequence diagram of Fig. 6.

First, in step S 11, the image forming apparatus 20 notifies the user terminal 10 that the image forming apparatus 20 is transitioning to the power off.

Next, in step S12, the user terminal 10 conducts status confirmation for the activation status of the image forming apparatus 20. Next, when it is confirmed that the image forming apparatus 20 is in the power-off status, in step S13, the user terminal 10 gives an instruction to the smart plug 30 to turn off the power supply to the image forming apparatus 20.

Next, the smart plug 30 turns off the power supply to the image forming apparatus 20 in step S14 and then transmits a completion report to the user terminal 10 in step S15.

When the plurality of user terminals 10a, 10b, and 10c is connected to the image forming apparatus 20 as illustrated in Fig. 1, any of the user terminals 10 may be used by the image forming apparatus 20 at the time of a transition to the standby status. For example, the user terminal 10 with which the image forming apparatus 20 has communicated immediately before a transition to the standby status may be used.

However, there may be a case where the image forming apparatus 20 cannot temporarily connect to the specific user terminal 10 when the image forming apparatus 20 attempts to connect to the user terminal 10 at the time of a transition to the standby status but the power of the user terminal 10 is off, for example.

In such a case, the image forming apparatus 20 may select the user terminal 10 connectable to the image forming apparatus 20 from among the plurality of user terminals 10 and transmit a notification to the selected user terminal 10.

For example, when the image forming apparatus 20 attempts and fails to connect to the user terminal 10a at the time of a transition to the standby status, the image forming apparatus 20 may attempt to connect to the other user terminals 10b and 10c and select the connectable user terminal 10.

Further, the image forming apparatus 20 may acquire the identification information of the smart plug 30 connected to the image forming apparatus 20, and the user terminal 10 may acquire the identification information of the image forming apparatus 20 and the identification information of the smart plug 30 via the image forming apparatus 20.

Here, the flow of processing related to acquisition of the identification information of the image forming apparatus 20 and the identification information of the smart plug 30 in the user terminal 10 will be described with reference to a sequence diagram of Fig. 7.

First, in step S21, the user inputs the identification information of the smart plug 30 to the image forming apparatus 20.

Next, in step S22, the user installs and sets a printer driver corresponding to the image forming apparatus 20 in the user terminal 10.

Next, in step S23, the user terminal 10 gives an instruction to the image forming apparatus 20 to transmit the identification information of the image forming apparatus 20 and the smart plug 30.

Next, in step S24, the image forming apparatus 20 transmits, to the user terminal 10, the identification information of the image forming apparatus 20 stored in the image forming apparatus 20 and the identification information of the smart plug 30 input by the user.

### <Modification>

Although the power management system according to the exemplary embodiment of the present disclosure has been described above, the technique according to the present disclosure is not limited to the above-described exemplary embodiment and can be appropriately changed.

For example, the apparatus connected to the smart plug 30 is not limited to the image forming apparatus 20 and may be any apparatus.

According to each of the above-described exemplary embodiments, the processor refers to a processor in a broad sense and includes general-purpose processors (for example, a central processing unit (CPU) and dedicated processors (for example, graphics processing unit (GPU), application specific integrated circuit (ASIC), field programmable gate array (FPGA), and programmable logic device).

In addition, the operation of the processor according to the above-described exemplary embodiment may be performed not only by one processor but also by a plurality of processors existing at physically separated positions in cooperation with each other. Furthermore, the sequence of each operation of the processor is not limited to the sequence described according to the above exemplary embodiment, and may be changed as appropriate.

In addition, in the technology according to the present disclosure, the system includes both a system configured by a plurality of apparatuses and a system configured by a single apparatus.

The technique of the present disclosure can also be applied to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising a processor configured to
   store identification information of an external apparatus and identification information of a smart plug that is capable of changing a supply status of power to the external apparatus in accordance with an instruction from outside in association with each other, and
   control the external apparatus and the smart plug corresponding to the external apparatus in accordance with one instruction input to the external apparatus.
(((2))) The information processing system according to (((1))), wherein, when the external apparatus is in a power-off status, the processor is configured to transmit, to the smart plug, an instruction to set the supply status of power to the external apparatus to an on status and then transmit an instruction to perform processing to the external apparatus.
(((3))) The information processing system according to (((2))), wherein
   the external apparatus is an image forming apparatus, and
   when the image forming apparatus is in a power-off status, the processor is configured to transmit, to the smart plug, an instruction to set a supply status of power to the image forming apparatus to an on status and then transmit a print instruction to the image forming apparatus.
(((4))) A power management system comprising:
   an external apparatus;
   a smart plug that is capable of changing a supply status of power to the external apparatus in accordance with an instruction from outside; and
   an information processing system including a processor, wherein
   the processor is configured to
      store identification information of the external apparatus and identification information of the smart plug in association with each other, and
      control the external apparatus and the smart plug corresponding to the external apparatus in accordance with one instruction input to the external apparatus.
(((5))) The power management system according to (((4))), wherein
   the external apparatus transmits a notification indicating a transition to a standby status to the processor when a set time has elapsed, and
   when the notification is received, the processor is configured to transmit, to the smart plug, an instruction to set the supply status of power to the external apparatus to an off status.
(((6))) The power management system according to (((5))), wherein
   the processor is one of a plurality of processors, and
   the external apparatus selects a processor connectable to the external apparatus from the plurality of processors and transmits the notification to the selected processor.
(((7))) The power management system according to any one of (((4))) to (((6))), wherein
   the external apparatus acquires identification information of the smart plug connected to the external apparatus, and
   the processor is configured to acquire identification information of the external apparatus and identification information of the smart plug through the external apparatus.
(((8))) A program causing a computer to execute a process comprising:
   storing identification information of an external apparatus and identification information of a smart plug that is capable of changing a supply status of power to the external apparatus in accordance with an instruction from outside in association with each other; and
   controlling the external apparatus and the smart plug corresponding to the external apparatus in accordance with one instruction input to the external apparatus.

With the information processing system of (((1))), both the external apparatus and the smart plug can be operated by one instruction input to the external apparatus.

With the information processing system of (((2))), even when the external apparatus is in the power-off status, the instruction to perform processing can be transmitted to the external apparatus.

With the information processing system of (((3))), even when the image forming apparatus is in the power-off status, the print instruction can be transmitted to the image forming apparatus.

With the power management system of (((4))), both the external apparatus and the smart plug can be operated by one instruction input to the external apparatus.

With the power management system of (((5))), the external apparatus can autonomously set the supply status of power to the external apparatus to the off status.

With the power management system of (((6))), even when connection to a processor among the plurality of processors fails, the smart plug can be controlled via another processor.

With the power management system of (((7))), the processor can acquire the identification information of the external apparatus and the identification information of the smart plug from a single site.

With the program of (((8))), both the external apparatus and the smart plug can be operated by one instruction input to the external apparatus.

## Claims

1. An information processing system comprising a processor configured to
store identification information of an external apparatus and identification information of a smart plug that is capable of changing a supply status of power to the external apparatus in accordance with an instruction from outside in association with each other, and
control the external apparatus and the smart plug corresponding to the external apparatus in accordance with one instruction input to the external apparatus.

2. The information processing system according to claim 1, wherein, when the external apparatus is in a power-off status, the processor is configured to transmit, to the smart plug, an instruction to set the supply status of power to the external apparatus to an on status and then transmit an instruction to perform processing to the external apparatus.

3. The information processing system according to claim 2, wherein
the external apparatus is an image forming apparatus, and
when the image forming apparatus is in a power-off status, the processor is configured to transmit, to the smart plug, an instruction to set a supply status of power to the image forming apparatus to an on status and then transmit a print instruction to the image forming apparatus.

4. A power management system comprising:
an external apparatus;
a smart plug that is capable of changing a supply status of power to the external apparatus in accordance with an instruction from outside; and
an information processing system including a processor, wherein
the processor is configured to
store identification information of the external apparatus and identification information of the smart plug in association with each other, and
control the external apparatus and the smart plug corresponding to the external apparatus in accordance with one instruction input to the external apparatus.

5. The power management system according to claim 4, wherein
the external apparatus transmits a notification indicating a transition to a standby status to the processor when a set time has elapsed, and
when the notification is received, the processor is configured to transmit, to the smart plug, an instruction to set the supply status of power to the external apparatus to an off status.

6. The power management system according to claim 5, wherein
the processor is one of a plurality of processors, and
the external apparatus selects a processor connectable to the external apparatus from the plurality of processors and transmits the notification to the selected processor.

7. The power management system according to any one of claims 4 to 6, wherein
the external apparatus acquires identification information of the smart plug connected to the external apparatus, and
the processor is configured to acquire identification information of the external apparatus and identification information of the smart plug through the external apparatus.

8. A program causing a computer to execute a process comprising:
storing identification information of an external apparatus and identification information of a smart plug that is capable of changing a supply status of power to the external apparatus in accordance with an instruction from outside in association with each other; and
controlling the external apparatus and the smart plug corresponding to the external apparatus in accordance with one instruction input to the external apparatus.
